# EUROPEAN PATENT APPLICATION

(11) **EP 2 682 854 A1**
(43) Date of publication of application: **08.01.2014**
(21) Application number: 13172981.6
(22) Date of filing: 20.06.2013
(51) Int. Cl.: G06F 3/0486

(54) **Method and terminal device for file processing based on user interface**

(30) Priority: 04.07.2012 CN 201210229787
(71) Applicant: Huawei Device Co., Ltd., Longgang District Shenzhen Guangdong 518129 (CN)
(72) Inventor: Niu, Ben, Shenzhen 518129 (CN); Yu, Yong, Shenzhen 518129 (CN)
(74) Representative: Isarpatent

(57) **Abstract**

The present invention discloses a method and a terminal device for file processing based on a user interface, where the method includes: detecting whether an operation command for dragging a file is generated on a user interface; if the operation command for dragging a file is generated, detecting whether an icon is triggered by dragging the file to the icon; and if the icon is triggered, processing the dragged file by using an external interface function corresponding to the icon. With the preceding method, the present invention may process a file by visually and quickly using an external interface of an intelligent terminal.

## Description

### TECHNICAL FIELD

The present invention relates to the field of human-machine interaction technologies, and in particular, to a method and a terminal device for file processing based on a user interface.

### BACKGROUND

An intelligent terminal, such as a mobile phone and a tablet computer, has many external interfaces, such as a universal serial bus (USB) interface, an infrared transmission interface, a wireless fidelity (Wireless Fidelity, WIFI) interface, a Bluetooth interface, a near field communication (Near Field Communication, NFC) interface, an earphone interface, a loudspeaker interface, and other external interfaces.

When the external interface of the intelligent terminal processes a file, for example, transferring a file by using a universal serial bus interface, an infrared transmission interface, a WIFI interface, a Bluetooth interface, or an NFC interface, a general procedure is: select a file to be transferred, open a menu, and choose a transfer command and a transfer destination (namely, an external device connected to the external interface). For another example, when an earphone interface or a loudspeaker interface is used to play a music file, a file to be played needs to be selected first, and a play command is chosen after a menu is opened.

The procedure described above for file processing over an external interface of an intelligent terminal has many steps and therefore is complex and time-consuming.

### SUMMARY

To solve the technical problem, the present invention provides a method and a terminal device for file processing based on a user interface, which are capable of processing a file in a visual and quick manner by using an external interface of an intelligent terminal.

In one aspect, an embodiment of the present invention provides a method for file processing based on a user interface, where the method includes: detecting whether an operation command for dragging a file is generated on a user interface; if the operation command for dragging a file is generated, detecting whether an icon is triggered by dragging the file to the icon of an external interface function; and if the icon is triggered, processing the dragged file by using the external interface function corresponding to the icon; where,
after generating the operation command for dragging a file and before detecting whether the icon is triggered by dragging the file to the icon of the external interface function, the method includes: displaying, according to the operation command, the icon of an external interface at a user interface location corresponding to the external interface;
displaying, according to the operation command, the icon of the external interface at the user interface location corresponding to the external interface includes: detecting, according to the operation command, whether the external interface is connected to an external device; and if the external interface is connected to an external device, displaying the icon of the external interface at the user interface location corresponding to the external interface;
after detecting, according to the operation command, whether the external interface is connected to an external device, the method further includes: if the external interface is not connected to an external device, connecting the external device to the external interface; and displaying the icon of the external interface at the user interface location corresponding to the external interface;
if the external interface is connected to an external device, displaying the icon of the external interface at the user interface location corresponding to the external interface includes: if the external interface is connected to an external device, determining whether external interfaces are connected to more than one external device; and if the external interfaces are connected to more than one external device, displaying icons of the external interfaces at user interface locations corresponding to the external interfaces corresponding to more than one external device; and
processing the dragged file by using the external interface function corresponding to the icon includes: transferring the dragged file if the external interface is a universal serial bus interface; or transferring the dragged file if the external interface is an infrared transmission interface; or transferring the dragged file if the external interface is a wireless fidelity WIFI interface; or transferring the dragged file if the external interface is a Bluetooth interface; or transferring the dragged file if the external interface is a near field communication NFC interface; or playing the dragged file if the external interface is an earphone interface; or playing the dragged file if the external interface is a loudspeaker interface.

In another aspect, an embodiment of the present invention provides a terminal device which includes a first detecting module, a second detecting module, and a file processing module, where the first detecting module is configured to detect whether an operation command for dragging a file is generated on a user interface, and send the operation command generated on the user interface to the second detecting module if the operation command for dragging a file is generated; the second detecting module is configured to receive the operation command from the first detecting module, and detect whether an icon is triggered by dragging the file to the icon of an external interface function after receiving the operation command for dragging a file, and send, to the file processing module, a result about whether the icon is triggered by dragging the file to the icon of the external interface function; and the file processing module is configured to receive, from the second detecting module, the result about whether the icon is triggered by dragging the file to the icon of the external interface function, and process the dragged file by using the external interface function corresponding to the icon.

The terminal device further includes an icon display module, configured to receive the operation command from the first detecting module and display, according to the operation command for dragging a file, the icon of an external interface at the user interface location corresponding to the external interface;
the icon display module includes a detecting unit and a first icon display unit, where the detecting unit is configured to receive, from the first detecting module, the operation command, detect, according to the operation command for dragging a file, whether an external interface is connected to an external device, and send a detection result to the first icon display unit; and the first icon display unit is configured to receive the detection result from the detecting unit, and display the icon of the external interface at the user interface location corresponding to the external interface if the detection result indicates that the external interface is connected to an external device;
the icon display module further includes a second icon display unit, configured to receive the detection result from the detecting unit, if the detection result indicates that the external interface is not connected to an external device, connect the external device to the external interface, and display the icon of the external interface at the user interface location corresponding to the external interface;
the first icon display unit includes a judging circuit and an icon display circuit; where the judging circuit is configured to receive the detection result from the detecting unit, if the detection result indicates that the external interface is connected to an external device, determine whether external interfaces are connected to more than one external device, and send a determination result to the icon display circuit; and the icon display circuit is configured to receive the determination result from the judging circuit, and if the determination result indicates that the external interfaces are connected to more than one external device, display icons of the external interfaces at user interface locations corresponding to the external interfaces corresponding to more than one external device;
the file processing module is configured to transfer the dragged file when the external interface is a universal serial bus interface, or transfer the dragged file when the external interface is an infrared transmission interface, or transfer the dragged file when the external interface is a wireless fidelity WIFI interface, or transfer the dragged file when the external interface is a Bluetooth interface, or transfer the dragged file when the external interface is a near field communication NFC interface, or play the dragged file when the external interface is an earphone interface, or play the dragged file when the external interface is a loudspeaker interface.

With the embodiments of the present invention, when it is detected that an operation command for dragging a file is generated on a user interface and it is detected that an icon is triggered by dragging the file to the icon, the dragged file can be processed by using an external interface function corresponding to the icon. In the entire operation process, a plurality of selections are not required and only two steps are required, that is, dragging and triggering, and the dragged file can be processed by using the corresponding external interface function. This operation method is simple, visualized, and fast. In addition, according to different external interface functions, different processing operations are performed on the dragged file, for example, transferring or the playing; in this way, a file can be processed in a diversified way.

### BRIEF DESCRIPTION OF DRAWINGS

FIG. 1 is a flowchart of a method for file processing based on a user interface according to an embodiment of the present invention;
FIG. 2 is a flowchart of another method for file processing based on a user interface according to an embodiment of the present invention;
FIG. 3 is a structural schematic diagram of a terminal device according to an embodiment of the present invention;
FIG. 4 is a structural schematic diagram of another terminal device according to an embodiment of the present invention; and
FIG. 5 is a circuit diagram of a device circuit according to an embodiment of the present invention.

### DESCRIPTION OF EMBODIMENTS

To make the objectives, technical solutions, and advantages of the embodiments of the present invention more clearly, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

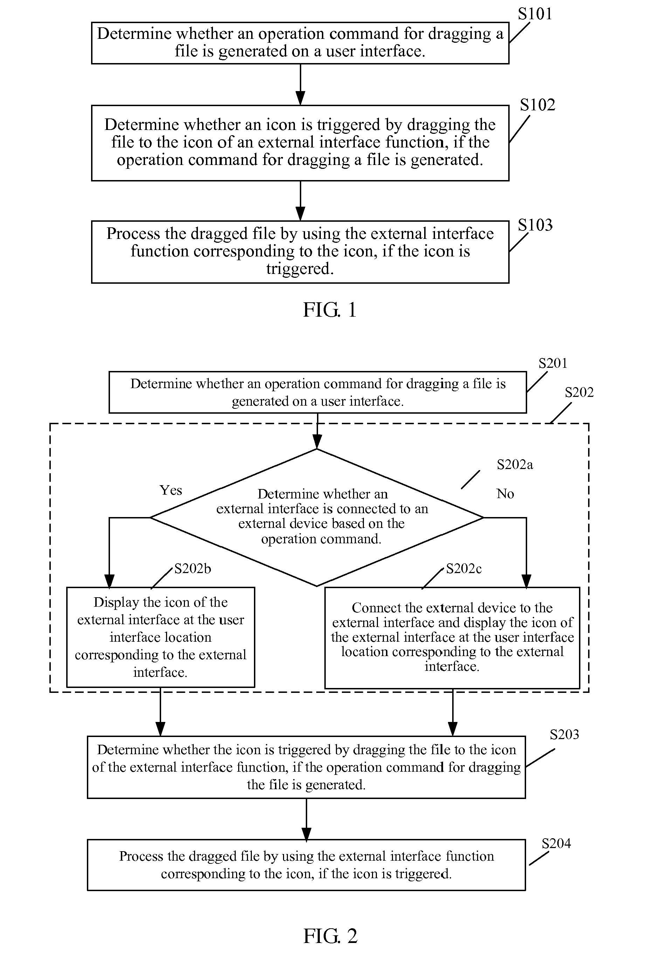

Referring to FIG. 1, FIG. 1 is a flowchart of a method for file processing based on a user interface according to an embodiment of the present invention, and the method includes:
S101: Detect whether an operation command for dragging a file is generated on a user interface.

The user interface (User Interface, UI) refers to an overall design for man-machine interaction, operation logics, and interface beauty. A desirable user interface makes software unique and brilliant and makes software operation comfortable, easy, and free and fully presents positioning and characteristics of the software. For a user interface on a touch screen, icons or other interface elements to be operated are displayed on the user interface. A user may perform a touch operation by touching the touch screen, to generate a corresponding operation command and input the operation command.

The operation command for dragging a file refers mainly to an operation command sent by a user to drag a file on a user interface. For an intelligent terminal with a touch screen, when an icon displayed on the touch screen is long pressed, the icon enters a dragging state; and dragging the icon is a basic application function of the intelligent terminal with a touch screen.

S102: Detect whether an icon is triggered by dragging the file to the icon of an external interface function, if the operation command for dragging a file is generated.

After it is detected that the operation command for dragging a file is generated, a user may drag the file to a destination location based on his/her purpose. If the user expects to drag the file to a destination icon, the corresponding icon is triggered by dragging the file to the icon.

S103: Process the dragged file by using the external interface function corresponding to the icon, if the icon is triggered.

If the icon is triggered by dragging the file to the icon, the file is correspondingly processed according to the external interface function. For example, data is transmitted by using an USB interface or an infrared interface or music is playing by using an earphone interface.

In the embodiment of the present invention, when it is detected that an operation command for dragging a file is generated on a user interface and it is detected that an icon is triggered by dragging the file to the icon, the dragged file is processed by using an external interface function corresponding to the icon. In the entire operation process, a plurality of selections are not required and only two steps are required, that is, dragging and triggering, and the dragged file can be processed by using the corresponding external interface function. This operation method is simple, visualized, and fast. In addition, according to different external interface functions, different processing operations are performed on the dragged file, for example, transferring or playing; in this way, a file can be processed in a diversified way.

Because operations such as dragging and triggering need to involve a user, the interaction between a user interface and a user can be implemented, so that user experience is improved.

Referring to FIG. 2, FIG. 2 is a flowchart of another method for file processing based on a user interface according to an embodiment of the present invention, and the method includes:
S201: Detect whether an operation command for dragging a file is generated on a user interface.

The operation command for dragging a file refers mainly to an operation command sent by a user to drag a file on a user interface. For an intelligent terminal with a touch screen, when an icon displayed on the touch screen is long pressed, the icon enters a dragging state; and dragging the icon is a basic application function of the intelligent terminal with a touch screen.

S202: Display the icon of an external interface at a user interface location corresponding to the external interface according to the operation command.

After it is detected that the operation command for dragging a file is generated on a user interface, the icon of the external interface is displayed at the user interface location corresponding to the external interface according to the operation command, to help a user select a destination icon. In another case, after the operation command of pressing the file on the user interface is detected, the icon of the external interface is displayed at the user interface location corresponding to the external interface. Of course, in an actual application, the icon of the external interface may be always displayed at the user interface location corresponding to the external interface.

S202 specifically includes the following steps:
S202a: Detect, according to the operation command, whether the external interface is connected to an external device; go to S202b if the external interface is connected to an external device; go to S202c if the external interface is not connected to an external device.

The external device refers to a device that may connect to a terminal device through the external interface of the terminal device, such as a device with a wired or wireless connection.

S202b: If the external interface is connected to an external device, display the icon of the external interface at the user interface location corresponding to the external interface.

Further, S202b specifically includes the following content:
S202b1: If the external interface is connected to an external device, determine whether external interfaces are connected to more than one external device.
S202b2: If the external interfaces are connected to more than one external device, display icons corresponding to the external interfaces at user interface locations corresponding to the external interfaces corresponding to more than one external device.
S202c: If the external interface is not connected to an external device, connect the external device to the external interface, and display the icon of the external interface at the user interface location corresponding to the external interface.
S203: If the operation command for dragging a file is generated, detect whether the icon is triggered by dragging the file to the icon of the external interface function;

after it is detected that the operation command for dragging a file is generated, a user may drag the file to a destination location based on his/her purpose. If the user expects to drag the file to a destination icon, the corresponding icon is triggered by dragging the file to the icon.

S204: Process the dragged file by using the external interface function corresponding to the icon, if the icon is triggered.

If the icon is triggered by dragging the file to the icon, processing the dragged file according to the external interface function, and the processing includes:
transferring a dragged file if the external interface is a universal serial bus interface; or transferring the dragged file if the external interface is an infrared transmission interface; or transferring the dragged file if the external interface is a wireless fidelity WIFI interface; or transferring the dragged file if the external interface is a Bluetooth interface; or transferring the dragged file if the external interface is a near field communication NFC interface; or playing the dragged file if the external interface is an earphone interface; or playing the dragged file if the external interface is a loudspeaker interface.

For example, if a USB icon is triggered by dragging a file to the icon, an USB interface is used to transmit data. In an actual operation, a user may determine whether to transmit data based on the display before data transmission.

For another example, if an infrared transmission icon is triggered by dragging a file to the icon, data is transmitted in an infrared way. In an actual operation, if multiple external devices connected in an infrared way are available at the same time, icons are displayed, and a user is allowed to select which external device the data is transmitted to.

Alternatively, the dragged file is played by using an earphone interface. That is, if an earphone icon is triggered by dragging the file to the icon, music is played over an earphone.

In summary, in the embodiment of the present invention, when it is detected that an operation command for dragging a file is generated on a user interface and it is detected that an icon is triggered by dragging the file to the icon, the dragged file is processed by using an external interface function corresponding to the icon. In the entire operation process, a plurality of selections are not required and only two steps are required, that is, dragging and triggering, and the dragged file can be processed by using the corresponding external interface function. This operation method is simple, visualized, and fast. In addition, according to different external interface functions, different processing operations are performed on the dragged file, for example, transferring or playing; in this way, a file can be processed in a diversified way.

With the foregoing method, the interaction between a user interface and a user can be implemented, and therefore user experience can be improved.

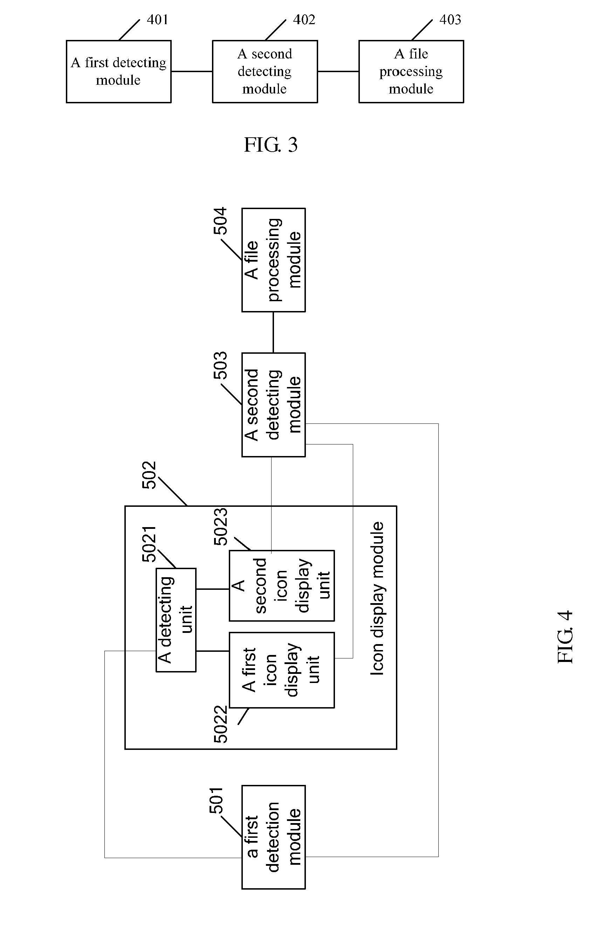

Referring to FIG. 3, FIG. 3 is a structural schematic diagram of a terminal device according to an embodiment of the present invention, where the terminal device includes: a first detecting module 401, a second detecting module 402, and a file processing module 403.

The first detecting module 401 is configured to detect whether an operation command for dragging a file is generated on a user interface, and send the operation command for dragging a file, which is generated on the user interface, to the second detecting module 402;
the second detecting module 402 is configured to receive the operation command from the first detecting module 401, detect whether an icon is triggered by dragging the file to the icon of an external interface function after receiving the operation command for dragging a file, and send, to the file processing module 403, a result about whether the icon is triggered by dragging the file to the icon of the external interface function; and
the file processing module 403 is configured to receive, from the second detecting module 402, the result about whether the icon is triggered by dragging the file to the icon of the external interface function, and if the result indicates that the icon is triggered, process the dragged file by using the external interface function corresponding to the icon.

In the embodiment of the present invention, when it is detected that an operation command for dragging a file is generated on a user interface and it is detected that an icon is triggered by dragging the file to the icon, the dragged file is processed by using an external interface function corresponding to the icon. In the entire operation process, a plurality of selections are not required and only two steps are required, that is, dragging and triggering, and the dragged file can be processed by using the corresponding external interface function. This operation method is simple, visualized, and fast. In addition, according to different external interface functions, different processing operations are performed on the dragged file, for example, transferring or playing; in this way, a file can be processed in a diversified way.

Referring to FIG. 4, FIG. 4 is a structural schematic diagram of another terminal device in an embodiment of the present invention, where the terminal device includes: a first detecting module 501, an icon display module 502, and a second detecting module 503, and a file processing module 504.

The first detecting module 501 is configured to detect whether an operation command for dragging a file is generated on a user interface, and if the operation command for dragging a file is generated, send the operation command for dragging a file, which is generated on the user interface, to the icon display module 502 and the second detecting module 503;
the icon display module 502 is configured to receive the operation command from the first detecting module 501, and display an icon of an external interface at a user interface location corresponding to the external interface according to the operation command for dragging a file; and
the icon display module 502 includes: a detecting unit 5021, a first icon display unit 5022, and a second icon display unit 5023.

The detecting unit 5021 is configured to receives, from the first detecting module 501, the operation command, detects whether the external interface is connected to an external device according to the operation command for dragging a file, and send a detection result to the first icon display unit 5022.

The first icon display unit 5022 is configured to receive the detection result from the detecting unit 5021, and display the icon of the external interface at the user interface location corresponding to the external interface if the detection result indicates that the external interface is connected to an external device.

Further, the first icon display unit 5022 includes: a judging circuit and an icon display circuit.

The judging circuit is configured to receive the detection result from the detecting unit 5021, if the detection result indicates that the external interface is connected to an external device, determine whether external interfaces are connected to more than one external device, and send a determination result to the icon display circuit;
the icon display circuit is configured to receive the determination result from the judging circuit, and if the determination result of the judging circuit indicates that the external interfaces are connected to more than one external device, display icons corresponding to the external interfaces at user interface locations corresponding to the external interfaces corresponding to more than one external device.

The second icon display unit 5023 is configured to receive a detection result from the detecting unit 5021, if the detection result indicates that the external interface is not connected to an external device, connect the external device to the external interface, and display the icon of the external interface at the user interface location corresponding to the external interface.

The second detecting module 503 is configured to receive the operation command from the first detecting module 501, detect whether an icon is triggered by dragging the file to the icon of an external interface function after receiving the operation command for dragging a file, and send, to the file processing module 504, the result about whether the icon is triggered by dragging the file to the icon of the external interface function;
the file processing module 504 is configured to receive, from the second detecting module 503, the result about whether the icon is triggered by dragging the file to the icon of the external interface function, and if the result indicates the icon is triggered, process the dragged file by using the external interface function corresponding to the icon.

The file processing module 504 is configured to transfer the dragged file when the external interface is a universal serial bus interface; or transfer the dragged file when the external interface is an infrared transmission interface; or transfer the dragged file when the external interface is a wireless fidelity WIFI interface; or transfer the dragged file when the external interface is a Bluetooth interface; or transfer the dragged file when the external interface is a near field communication NFC interface, or play the dragged file when the external interface is an earphone interface; or play the dragged file when the external interface is a loudspeaker interface.

In the embodiment of the present invention, when it is detected that an operation command for dragging a file is generated on a user interface and it is detected that an icon is triggered by dragging the file to the icon, the dragged file is processed by using an external interface function corresponding to the icon. In the entire operation process, a plurality of selections are not required and only two steps are required, that is, dragging and triggering, and the dragged file can be processed by using the corresponding external interface function. This operation method is simple, visualized, and fast. In addition, according to different external interface functions, different processing operations are performed on the dragged file, for example, transferring or playing; in this way, a file can be processed in a diversified way.

With the foregoing method, the interaction between a user interface and a user can be implemented, and therefore user experience can be improved.

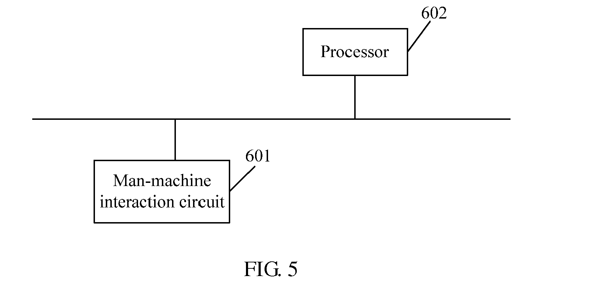

Referring to FIG. 5, FIG. 5 is a circuit diagram of a device circuit according to an embodiment of the present invention. The device circuit includes a man-machine interaction circuit 601 and a processor 602.

The man-machine interaction circuit 601 is configured to detect whether an operation command for dragging a file is generated on a user interface, detect whether an icon is triggered by dragging the file to the icon of an external interface function if the operation command for dragging a file is generated, and send, to the processor 602, a result about whether the icon is triggered by dragging the file to the icon of the external interface function; and
the processor 602 is configured to receive, from the man-machine interaction circuit 601, the result about whether the icon is triggered by dragging the file to the icon of the external interface function, and process the dragged file by using the external interface function corresponding to the icon when the icon is triggered.

Persons of ordinary skill in the art may understand that all or a part of the steps of the methods in the embodiments may be implemented by a computer program instructing relevant hardware. The program may be stored in a computer readable storage medium. When the program is run, the steps of the methods in the embodiments are performed; the foregoing storage medium includes any medium that may store program code, such as a ROM, RAM, a magnetic disk, or an optical disk.

Finally, it should be noted that each of the foregoing embodiments is merely intended for describing the technical solutions of the present invention other than limiting the present invention. Although the present invention is described in detail with reference to each of the foregoing embodiments, persons of ordinary skill in the art should understand that they may still make modifications to the technical solutions described in the foregoing embodiments or make equivalent replacements to part or all of technical features thereof, and the modifications or replacements cannot make the essence of the corresponding technical solutions depart from the scope of the technical solutions of the embodiments of the present invention.

## Claims

1. A method for file processing based on a user interface, comprising:
detecting whether an operation command for dragging a file is generated on a user interface;
if the operation command for dragging a file is generated, detecting whether an icon is triggered by dragging the file to the icon of an external interface function; and
if the icon is triggered, processing the dragged file by using the external interface function corresponding to the icon.

2. The method according to claim 1, wherein after the generating the operation command for dragging a file and before the detecting whether the icon is triggered by dragging the file to the icon of the external interface function, the method further comprises:
displaying, according to the operation command, an icon of an external interface at a user interface location corresponding to the external interface.

3. The method according to claim 2, wherein the displaying, according to the operation command, the icon of the external interface at the user interface location corresponding to the external interface comprises:
detecting, according to the operation command, whether the external interface is connected to an external device; and
if the external interface is connected to the external device, displaying the icon of the external interface at the user interface location corresponding to the external interface.

4. The method according to claim 3, wherein after the detecting, according to the operation command, whether the external interface is connected to an external device, the method further comprises:
if the external interface is not connected to an external device, connecting the external device to the external interface; and displaying the icon of the external interface at the user interface location corresponding to the external interface.

5. The method according to claim 3, wherein the displaying, if the external interface is connected to an external device, the icon of the external interface at the user interface location corresponding to the external interface comprises:
if the external interface is connected to an external device, determining whether external interfaces are connected to more than one external device; and
if the external interfaces are connected to more than one external device, displaying icons of the external interfaces at user interface locations corresponding to the external interfaces corresponding to more than one external device.

6. The method according to any one of claims 1 to 5, wherein the processing the dragged file by using the external interface function corresponding to the icon comprises:
if the external interface is a universal serial bus interface, transferring the dragged file; or,
if the external interface is an infrared transmission interface, transferring the dragged file; or
if the external interface is a wireless fidelity WIFI interface, transferring the dragged file; or,
if the external interface is a Bluetooth interface, transferring the dragged file; or,
if the external interface is a near field communication NFC interface, transferring the dragged file; or,
if the external interface is an earphone interface, playing the dragged file; or,
if the external interface is a loudspeaker interface, playing the dragged file.

7. A terminal device, comprising:
a first detecting module, a second detecting module, and a file processing module; wherein
the first detecting module is configured to detect whether an operation command for dragging a file is generated on a user interface; and when the operation command for dragging a file is generated, send the operation command for dragging a file generated on the user interface to the second detecting module;
the second detecting module is configured to receive the operation command from the first detecting module; detect whether an icon is triggered by dragging the file to the icon of an external interface function after receiving the operation command for dragging a file; and send, to the file processing module, a result about whether the icon is triggered by dragging the file to the icon of the external interface function; and
the file processing module is configured to receive, from the second detecting module, the result about whether the icon is triggered by dragging the file to the icon of the external interface function; and when the result indicates that the icon is triggered, process the dragged file by using the external interface function corresponding to the icon.

8. The terminal device according to claim 7, wherein the terminal device further comprises an icon display module, and the icon display module is configured to receive the operation command from the first detecting module, and display, according to the operation command for dragging a file, an icon of an external interface at a user interface location corresponding to the external interface.

9. The terminal device according to claim 8, wherein the icon display module comprises a detecting unit and a first icon display unit, wherein,
the detecting unit is configured to receive, from the first detecting module, the operation command, and detect, according to the operation command for dragging a file, whether the external interface is connected to an external device, and send a detection result to the first icon display unit; and
the first icon display unit is configured to receive the detection result from the detecting unit, and when the detection result indicates that the external interface is connected to an external device, display the icon of the external interface at the user interface location corresponding to the external interface.

10. The terminal device according to claim 9, wherein the icon display module further comprises a second icon display unit, and the second icon display unit is configured to receive the detection result from the detecting unit, when the detection result indicates that the external interface is not connected to an external device, connect the external device to the external interface, and display the icon of the external interface at the user interface location corresponding to the external interface.

11. The terminal device according to claim 9, wherein the first icon display unit comprises a judging circuit and an icon display circuit;
the judging circuit is configured to receive the detection result from the detecting unit, and when the detection result indicates that the external interface is connected to an external device, determine whether external interfaces are connected to more than one external device, and send a determination result to the icon display circuit; and
the icon display circuit is configured to receive the determination result from the judging circuit, and when the determination result of the judging circuit indicates that the external interfaces are connected to more than one external device, display icons of the external interfaces at user interface locations corresponding to the external interfaces corresponding to more than one external device.

12. The terminal device according to any one of claims 7 to 11, wherein the file processing module is specifically configured to, when the external interface is a universal serial bus interface, transfer the dragged file; or when the external interface is an infrared transmission interface, transfer the dragged file; or when the external interface is a wireless fidelity WIFI interface, transfer the dragged file; or when the external interface is a Bluetooth interface, transfer the dragged file; or when the external interface is a near field communication NFC interface, transfer the dragged file; or when the external interface is an earphone interface, play the dragged file; or when the external interface is a loudspeaker interface, play the dragged file.
